# EUROPÄISCHE PATENTSCHRIFT

(11) **EP 0 475 123 B1**
(45) Veröffentlichungstag und Bekanntmachung des Hinweises auf die Patenterteilung: **04.01.1995**
(21) Anmeldenummer: 91113817.0
(22) Anmeldetag: 17.08.1991
(51) Int. Cl.: A01N 43/80

(54) **Verwendung von 2-n-Alkyl-1,2-benzisothiazolin-3-onen als technische Mikrobiozide**
Use of 2-n-alkyl-1,2-benzisothiazolin-3-ones as technical microbiocides
Utilisation de 2-n-alkyle-1,2-benzisothiazolin-3-ones comme microbiocides techniques

(30) Priorität: 30.08.1990 DE 4027378
(43) Veröffentlichungstag der Anmeldung: 18.03.1992
(73) Patentinhaber: RIEDEL-DE HAEN AKTIENGESELLSCHAFT, D-30926 Seelze (DE)
(72) Erfinder: Lindner, Wolfgang, Dr., W-3016 Seelze 1 (DE); Wöhner, Gerhard, Dr., W-3050 Wunstorf (DE); Schaper, Wolfgang, Dr., D86420 Diedorf (DE); Sachse, Burkhard, Dr., D-65779 Kelkheim (DE); Hartz, Peter,Dr., D-65779 Kelkheim (DE)
(74) Vertreter: Muley, Ralf, Dr.

(56) Entgegenhaltungen:
- GB-A- 848 130
- GB-A- 1 531 431
- US-A- 3 517 022
- US-A- 3 862 955
- US-A- 4 396 413

## Beschreibung

Die Erfindung betrifft die Verwendung von 2-n-Alkyl-1,2-benzisothiazolin-3-onen als technische Mikrobiozide.

Wasserhaltige oder der Witterung ausgesetzte technische Materialien werden schnell von Mikroorganismen wie Schimmelpilzen, Hefen oder Algen besiedelt und durch deren Stoffwechselaktivitäten geschädigt.

Man setzt daher diesen Materialien zur Werterhaltung mikrobiozid wirkende Substanzen zu, wobei bislang die Umweltverträglichkeit oder Toxikologie der eingesetzten Mittel weniger beachtet wurde. Im wesentlichen wurden daher chlorierte Phenole und Tributylzinnester verwendet. Aus ökologischen Gründen muß der Einsatz dieser Stoffe aber eingeschränkt werden. Es besteht daher ein großer Bedarf an in Wasser schwerlöslichen, nichtflüchtigen, breit gegen Pilze wirkenden, wenig toxischen und für die Umwelt wenig schädlichen Substanzen, die zum Schutz von Holz, Leder, Textilien, Anstrichen, Putz, technischen wäßrigen Formulierungen, Papier, Dachbeschichtungen, Kunststoffen usw. eingesetzt werden können.

Es wurden bereits verschiedene 2-Alkyl-4-isothiazolin-3-one zur fungiziden Ausrüstung von technischen Materialien vorgeschlagen. Zum Beispiel findet 2-n-Octyl-isothiazolin-3-on Einsatz zum Schutz von Fassadenfarben, Leder, Holz usw. Nachteilig ist, daß diese Verbindung nicht alkalistabil ist und bei pH-Werten oberhalb von 9 hydrolisiert und damit inaktiviert wird. Außerdem wird sie durch Regenwasser leicht aus dem zu schützenden Material ausgewaschen, so daß der Schutz nicht wie gewünscht langandauernd ist.

Auch der Einsatz von 2-Alkyl-1,2-benzisothiazolin-3-onen mit Alkylgruppen, die 1 bis 3 Kohlenstoffatome enthalten, für den Schutz von technischen Materialien, ist bereits beschrieben (siehe GB 1 531 431). Obwohl diese Verbindungen nur wenig in Wasser löslich sind, werden sie bei Bewitterung der zu schützenden Materialien wie Anstriche, Fassadenputze, Dichtungsmassen, Holzanstriche, Betonbeschichtungen schnell ausgewaschen, verlieren so ihre Wirksamkeit und gelangen in die Umwelt. Sie sind demgemäß nicht für den langanhaltenden fungiziden Fassadenschutz geeignet. So bewuchs ein Holzanstrich, ausgerüstet mit 0,3 % 2-Methyl-1,2-benzisothiazolin-3-on, in einem feuchtwarmen Klima in Malaysia innerhalb von 2 Monaten zu über 80 % der Oberfläche mit Schimmelpilzen (Beispiel 1 in GB 1 531 431).

Die Verwendbarkeit von 2-Alkyl-1,2-benzisothiazolin-3-one mit Alkylgruppen mit 4 bis 18 Kohlenstoffatomen als Mikrobiozid für pharmazeutische Zwecke, tiermedizinische Anwendungen, sowie für den Pflanzenschutz ist in der GB 848,130 und in der US 3,862,955 erwähnt.

Aufgabe vorliegender Erfindung ist es, Verbindungen bereitzustellen, die langandauernde hohe fungizide Aktivität aufweisen, in technischen Systemen eingesetzt werden können, ohne deren Eigenschaften nachteilig zu beeinflussen und die gleichzeitig die oben genannten Nachteile nicht mehr haben.

Diese Aufgabe wird in hervorragender Weise gelöst durch die Verwendung von 2-n-Alkyl-1,2-benzisothiazolin-3-onen der allgemeinen Formel I 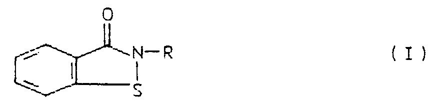
worin R geradkettiges (C₆-C₈)-Alkyl bedeutet, als technische Mikrobiozide.

Die erfindungsgemäß zu verwendenden Verbindungen der allgemeinen Formel I zeichnen sich durch hohe Wirksamkeit und ihr breites Wirkungsspektrum gegen Hefen, wie z.B. Candida albicans, Torula utilis, Saccharomyces cerevisiae, Schimmelpilze, wie z.B. Cladosporium resinae, Aspergillus niger, Sclerophoma pityophila, Scopulariopsis brevicaulis oder holzverblauende Pilze, wie z.B. Aureobasidium pullulans aus. Sie eignen sich damit in hervorragender Weise für den Schutz von technischen Materialien vor Bewuchs mit Pilzen und Hefen, weisen eine wesentlich höhere Aktivität gegen Schimmelpilze auf und sind viel besser auslaugbeständig als die bislang für dieses Einsatzgebiet beschriebenen N-Alkyl-1,2-benzisothiazolin-3-one mit Alkylgruppen mit 1 bis 3 Kohlenstoffatomen. Sie sind darüberhinaus sehr viel besser auslaugbeständig, sehr viel besser temperaturbeständig und alkaliresistent als das in großem Maße nach dem Stand der Technik kommerziell genutzte 2-Octylisothiazolin-3-on.

So lassen sich die Verbindungen der allgemeinen Formel I auch in Anwendungsbereichen einsetzen, wie z.B. in Beschichtungen auf extrem alkalischen Betonuntergründen mit hoher Auswaschbelastung, bei denen das dem Stand der Technik entsprechende 2-Octylisothiazolin-3-on hydrolisiert und unwirksam wird. Sie können daher besonders vorteilhaft in Materialien wie Fassadenbeschichtungen, Dachsteinbeschichtungen, Kühlschmierstoffen, Silicatfarben und anderen alkalisch eingestellten technischen Systemen als Fungizid eingesetzt werden. Aber auch ihr Einsatz zum Schutz von Holz, Leder, Lederhalbfabrikaten, Fassadenanstrichen, Putzsystemen, Holzanstrichen, Kunststoffen, wie z.B. PVC, Polyurethane oder Polybutylen, Kunststoffputzen, Textilien, Industriewasserkreisläufen, Silikondichtungsmassen, Metallbearbeitungsflüssigkeiten, Leimen oder Treibstoffen ist vorteilhaft.

Diese herausragenden Eigenschaften sind insbesondere im Hinblick auf die US-3,862,955 als äußerst überraschend zu bezeichnen, da dort 2-(C₄-C₁₈)-Alkyl-1,2-benzisothiazolin-3-one für Verwendungszwecke mit gänzlich anderen Anforderungsprofilen beschrieben werden.

So wird beispielsweise von einem Pflanzenschutzfungizid eine selektive Wirksamkeit und eine gute Abbaubarkeit erwartet, während ein Fungizid für technische Produkte möglichst breit wirksam sein soll und die Materialien zum Teil über mehrere Jahre schützen soll.

Die erfindungsgemäße Verwendung der Verbindungen der allgemeinen Formel I geschieht in üblicher Weise in Form einer Formulierung.

Bevorzugte Formulierungen sind Lösungen, aber auch wäßrige Emulsionen oder wasserverdünnbare Emulsionskonzentrate sind vorteilhaft. Die Wahl des Lösemittels für Lösungen ist nicht kritisch.

Besonders gut für unpolare Systeme eignen sich Aromatenbenzine, Xylol, Trimethylbenzol; Ketone wie z.B. Aceton, Cyclohexanon, Isophoron, Methylisobutylketon; Ether und Glykolether, wie z.B. Diisopropylether, Dimethoxyethan, Diethylenglykoldimethylether, Triethylenglykoldimethylether; Ester wie z.B. Essigsäureethylester, Essigsäurebutylester; Glykole, deren Mono- und Diether oder deren Mono- oder Diester.

Die Formulierungen enthalten die Verbindungen der allgemeinen Formel I bevorzugt in Mengen von 1 bis 98 Gew.%, besonders bevorzugt in Mengen von 10 bis 50 Gew.%. Die Anwendungskonzentration richtet sich nach der Art des zu schützenden Materials, der Auslaugbelastung und des zu erwartenden Mikrobenbefalls und liegt bevorzugt zwischen 0,005 und 3 %, besonders bevorzugt zwischen 0,05 und 1 %, bezogen auf das zu schützende Material.

Eine besonders vorteilhafte erfindungsgemäße Verwendung ist der Schutz polyvinylchloridhaltiger Kunststoffe vor Befall mit Scopulariopsis brevicaulis. Dieser Pilz bewächst bevorzugt Polyvinylchlorid und ist in der Lage reduktiv aus Phosphatweichmachern Phosphan, aus Arsenverbindungen Arsan und aus Antimonverbindungen Stilban zu bilden (Richardsen, Guernsey). Phosphor-, Arsen- und Antimonverbindungen werden häufig als Stabilisatoren, wie z.B. als Flammhemmer PVC zugesetzt. Da die entsprechenden Wasserstoffverbindungen hochtoxisch sind, muß der Bewuchs mit Scopulariopsis brevicaulis verhindert werden.

Die Verbindungen der allgemeinen Formel I sind dazu in hervorragender Weise geeignet, da sie gegen Scopulariopsis brevicaulis hochaktiv sind und durch die bei der Kalandrierung der Kunststoffe auftretenden Temperaturbelastungen nicht zerstört werden.

Eine weitere vorteilhafte erfindungsgemäße Verwendung ist der Einsatz in unpolaren, hydrophoben Medien, wie z.B. Textilhydrophobierungsmitteln, Silikonölen oder Benzinen. 2-Octylisothiazolin-3-on ist in diesen Medien nicht einsetzbar.

Die Verbindungen der allgemeinen Formel I können auch in Kombination mit anderen bekannten antimikrobiell wirkenden Substanzen eingesetzt werden. Beispielsweise seien genannt: Benzimidazolylmethylcarbamat, quaternäre Ammoniumsäure (Quats), Thiocyanatomethylthiobenzothiazol, Methylenbisthiocyanat, Iodpropargylbutylcarbamat, 2-Octyl-isothiazolin-3-on, 2-Methylthio-4-tertiärbutylamino-6-cyclopropylamino-1,3,5-triazin, Diuron, Dichlofluanid, Captan, Folpet.

Die Herstellung der Verbindungen der allgemeinen Formel I geschieht in einfacher Weise nach literaturbekannten Methoden (z.B. USP 3,862,955).

### Beispiel 1

### Wirksamkeit gegen Pilze

Die mikrobiozide Wirksamkeit wird durch Bestimmung der minimalen Hemmkonzentration (MHK-Werte) ermittelt. Der MHK-Wert gibt die niedrigste Konzentration eines Wirkstoffes an, bei der das Wachstum des Testkeimes noch völlig gehemmt wird. Dazu werden abgestufte Wirkstoffmengen in gelöster Form in flüssige Nährböden bei 50°C eingearbeitet, die Nährböden werden anschließend durch Abkühlen verfestigt, mit den Teststämmen infiziert und bebrütet. Es wird somit eine modifizierte Methode der Prüfung der bakteriostatischen Wirkung mit Hilfe des Verdünnungstests angewendet (vgl. Richtlinien für die Prüfung chemischer Desinfektionsmittel, Gustav Fischer Verlag, Stuttgart, 2. Auflage, 1969, Seite 5-6).

Als Nährboden für die Pilze dienten Malzagar-N-Nährbodenplatten. Die Beimpfung erfolgte mit 1 ml einer Pilzsporensuspension mit 10³ Keimen pro ml. Nach einer 14 Tage langen Bebrütung bei 20°C erfolgte die Beurteilung der MHK-Werte in mg pro kg Nährboden (siehe Tabelle 1)

**Tabelle 1**

| Substanz | **Testpilz** | | | | |
|---|---|---|---|---|---|
| | An | Pf | Aup | Uc | Scc |
| 2-n-Octyl-1,2-benzisothiazolin-3-on | 4 | 4 | 2 | 2 | 2 |
| 2-n-Hexyl-1,2-benzisothiazolin-3-on | 5 | 5 | 5 | 5 | 5 |
| Vergleichsbeispiel aus GB 1 531 431 2-n-Propyl-1,2-benzisothiazolin-3-on | 100 | 5 | 10 | 5 | 10 |
| An = Aspergillus niger Pf = Penicillium funiculosum Aup = Aureobasidium pullulans Uc = Ulocladium consortiale Scc = Saccharomyces cerevisiae | | | | | |

### Beispiel 2

### Prüfung der fungiziden Filmkonservierung

2,0 g 2-n-Octyl-benzisothiazolin-3-on (OBIT) wurde in 18,0 g Ethylglykol gelöst. Die so erhaltene klare lösung wurde in einer Menge von 1,0 (0,1 % Wirkstoff), 2,0 (0,2 Wirkstoff) und 5,0 % (0,5 % Wirkstoff) in eine handelsübliche, fungizidfreie Dispersionsfarbe eingearbeitet. Zum Vergleich wurde eine Lösung von 2,0 g 2-Methyl-1,2-benzisothiazolin-3-on (Vergleichsbeispiel aus GB 1 531 431) in 18,0 g Ethylglykol hergestellt und zu 5,0 % (0,5 % Wirkstoff) in gleicher Weise in weitere Proben der Farbe eingearbeitet. Als weiterer Vergleich diente eine gleichartige Dispersionsfarbenprobe, die gemäß Stand der Technik mit 0,5 % 2-n-Octylisothiazolin-3-on ausgerüstet war. Die so erhaltenen Farbproben wurden jeweils zu 200 g/m² auf Rundfilterpapiere (Nr. 597 von Schleicher & Schüll, Durchmesser 5,5 cm) gestrichen und anschließend 72 Stunden lang bei einer Temperatur von 30^{o}C getrocknet.

Zur Simulation einer Auslaugung durch Regenwasser wurden die mit Farbe beschichteten Prüfkörper (Serie C) 96 Stunden mit Leitungswasser gewässert, wobei 63 l Wasser pro m² eingesetzt wurden. Das Auslaugwasser wurde jeweils nach 24 Stunden gewechselt.

Die Prüfung der Bewuchsfestigkeit gegen Schimmelpilze wurde auf festen Malzagar-Nährböden durchgeführt. Die trockenen Prüfkörper wurden nach beidseitiger Sterilisierung unter UV-Licht in Petrischalen auf die vorher mit einer Kultur des Prüforganismus beimpften Nährböden aufgelegt. Nach einer Bebrütungszeit von 14 Tagen bei einer Temperatur von 29^{o}C wurde der Grad des Bewuchses auf den Farbanstrichen visuell in einer Skala von 0 bis 4 bewertet: (siehe Tabelle 2).
- 0: Anstrich nicht bewachsen
- 1: Anstrich gering bewachsen, unter 10 % der Oberfläche
- 2: Anstrich bewachsen, 10 bis 30% der Oberfläche
- 3: Anstrich bewachsen, 30 bis 60% der Oberfläche
- 4: Anstrich überwachsen, über 60% der Oberfläche

**Tabelle 2**

| Bezeichnung der Proben | Bewertung des Bewuchses mit Testpilz | | | |
|---|---|---|---|---|
| | Wässerung | An | Tv | Pf |
| 1.) Farbe mit 0.1 % OBIT | ohne | 0 | 0 | 0 |
| | 48 Stdn | 0 | 0 | 0 |
| | 96 Stdn | 0 | 0 | 0 |
| 2.) Farbe mit 0.2 % OBIT | ohne | 0 | 0 | 0 |
| | 48 Stdn | 0 | 0 | 0 |
| | 96 Stdn | 0 | 0 | 0 |
| 3.) Farbe mit 0.5 % OBIT | ohne | 0 | 0 | 0 |
| | 48 Stdn | 0 | 0 | 0 |
| | 96 Stdn | 0 | 0 | 0 |
| 4.) Vergleichbeispiel Farbe mit 0.5 % 2-Methylbenzisothiazolin-3-on | ohne | 0 | 0 | 0 |
| | 48 Stdn | 4 | 3 | 3 |
| | 96 Stdn | 4 | 4 | 4 |
| 5.) Vergleichbeispiel Farbe mit 0.5 % 2-Octylisothiazolin-3-on | ohne | 0 | 0 | 0 |
| | 48 Stdn | 0 | 3 | 0 |
| | 96 Stdn | 3 | 3 | 3 |
| 6.) Wuchskontrolle Farbe ohne Zusatz | ohne | 4 | 4 | 4 |
| | 48 Stdn | 4 | 4 | 4 |
| | 96 Stdn | 4 | 4 | 4 |
| An = Aspergillus niger Tv = Trichoderma viride Pf = Pencillium funiculosum | | | | |

### Beispiel 3

### Laborprüfung der fungiziden Ausrüstung von Beschichtungen auf alkalischen Betonuntergründen

Die zu prüfenden Wirkstoffe werden in abgestuften Konzentrationen in eine handelsübliche Styrolacrylatfarbe eingearbeitet. Die biologische Prüfung erfolgt auf Rundfilterpapier (Nr. 597 von Schleicher & Schüll, Durchmesser 5,5 cm). Dazu wurden die Filter mit der zu prüfenden modifizierten Dispersionsfarbe einseitig bestrichen.

Parallel dazu stellte man durch Mischung von 71.6 % Estrichsand (ca. 1,6 % Feuchtigkeit), 18,9 % Portlandzement nach DIN 1164 und 9,6 % Leitungswasser einen frischen Beton her, der in eine Petrischale gefüllt und die Oberfläche mit dem Spatel geglättet wurde. Durch mehrmaliges vorsichtiges Aufklopfen der Petrischale wird der Beton verdichtet. Die frisch angestrichenen Papierfilter werden unverzüglich auf den frisch hergestellten feuchten Beton aufgelegt und mit Hilfe eines Spatels angedrückt. Die Petrischale wurde mit Hilfe eines Klebebandes (z.B. Tesaband) abgedichtet, um ein Austrocknen zu verhindern.

Die Prüfkörper wurden dann 48 Stunden in einem Wärmeschrank bei 60^{o}C gelagert. Anschließend ließ man auf Raumtemperatur abkühlen und hob dann die feuchten Filter vorsichtig mit dem Spatel von der Betonoberfläche ab. Die Filter wurden dann 16 Stunden auf Filterpapier an der Luft getrocknet. Zur Simulation einer Auslaugung durch Regenwasser wurden die mit Farbe beschichteten Prüfkörper 48 Stunden (Serie "belastet" in der Tabelle) mit Leitungswasser gewässert, wobei 60 l Wasser pro m² eingesetzt wurden. Das Auslaugwasser wurde jeweils nach 24 Stunden gewechselt.
Die biologische Prüfung erfolgte wie in Beispiel 2 beschrieben auf festen Nährböden in Petrischalen (siehe Tabelle 3)

**Tabelle 3**

| Bezeichnung der Proben | Bewertung des Bewuchses mit Testpilz | | | |
|---|---|---|---|---|
| | Wässerung | An | Uc | Pf |
| 1.) Farbe mit 0,2 % OBIT | ohne | 0 | 0 | 0 |
| | mit | 0 | 1 | 0 |
| 2.) Farbe mit 0,5 % OBIT | ohne | 0 | 0 | 0 |
| | mit | 0 | 0 | 0 |
| 3.) Vergleichbeispiel Farbe mit 0,5 % 2-Methyl-benzisohhiazolin-3-on | ohne | 0 | 0 | 0 |
| | mit | 4 | 3 | 3 |
| 4.) Vergleichbeispiel Farbe mit 0,5 % 2-Octyl-isothiazolin-3-on | ohne | 0 | 0 | 0 |
| | mit | 4 | 4 | 4 |
| 5.) Wuchskontrolle Farbe ohne Zusatz | ohne | 4 | 4 | 4 |
| | mit | 4 | 4 | 4 |
| An = Aspergillus niger Uc = Ulocladium consortiale Pf = Penicillium funiculosum | | | | |

### Beispiel 4

### Laborprüfung der fungiziden Ausrüstung von Metallbearbeitungsflüssigkeiten

In ein handelsübliches halbsynthetisches Kühlschmierstoffkonzentrat wurde 0,5 % 2-n-Octyl-1,2-benzisothiazolin-3-on homogen eingearbeitet. Dieses modifizierte Kühlschmierstoffkonzentrat wurde mit Leitungswasser auf die Einsatzkonzentrationen von 2 bzw. 5 % verdünnt. Zur Unterdrückung des Bakterienwachstums wurden 0,07 % handelsübliches Trishydroxyethylhexahydrotriazin zugesetzt. Die Emulsionen wurden mit je 1 g Eisenfeilspänen versetzt und mit einer Pilzmischsporensuspension mit ca. 10⁴ Keimen pro ml versetzt. Die Pilzmischsporensuspension entSporen von Aspergillus niger, Pencillium funiculosum, Aureobasidium pullulans und Cladosporium herbarum. Vor jeder erneuten Infektion wurden die Emulsionen durch Ausstreichen von 0,2 ml auf einem festen Malzagar-Nährboden auf überlebende, keimungsfähige Pilzsporen untersucht. Nach 6tägiger Bebrütung bei 29^{o}C wurden die Nährbodenplatten nach folgendem Schema ausgewertet:
- 0: keine koloniebildende Einheiten im Ausstrich
- 1: 1 - 10 Keime
- 2: 11 - 100 Keime
- 3: mehr als 100 Keime, Ausstrich aber nicht vollständig bewachsen
- 4: Ausstrich vollständig bewachsen
Als Vergleich diente ein Kühlschmierstoffkonzentrat, das durch Zusatz von 3,0 %, eines handelsüblichen Konservierungsmittel für Metallbearbeitungsflüssigkeiten, modifiziert war.
Selbst nach 10 Impfcyclen waren die mit 100 mg/kg und 250 mg/kg 2-n-Octyl-1,2-benzisothiazolin-3-on ausgerüsteten Emulsionen nicht mit den Prüfpilzen verkeimt (Bewertung 0), während in den Vergleichsproben mit 600 mg der Vergleichssubstanz Pilzsporen überleben konnten (Bewertung 2). Nicht modifizierte Emulsionen waren stark mit überlebenden Pilzsporen kontaminiert (Bewertung 4).

### Beispiel 5

### Laborprüfung zum Einsatz in PVC-Kunststoffen. Prüfung der Wirksamkeit gegen Scopulariopsis brevicaulis.

Zur Prüfung der Einsetzbarkeit in PVC wurde Dioctylphthalat mit 4 % 2-n-Octyl-1,2-benzisothiazolin-3-on vermischt und zur Laborsimulation der Temperaturbelastung bei der Herstellung von PVC-Folien 15 Minuten auf 200^{o}C erhitzt.

Die biologische Prüfung der Aktivität gegen Scopulariopsis brevicaulis wurde analog Beispiel 1 auf mit 1 % Harnstoff modifizierten Malzagar-N-Nährbodenplatten durchgeführt. Als Vergleich diente das dem Stand der Technik entsprechende 2-Octylisothiazolin-3-on sowie Carbendazim (siehe Tabelle 4).

**Tabelle 4**

| Substanz | Scopulariopsis brevicaulis MHK-Werte |
|---|---|
| 2-n-Octyl-1,2-benzisothiazolin-3-on | 1 mg/kg |
| Vergleichsbeispiel 2-n-Octylisothiazolin-3-on | > 1000 mg/kg |
| Vergleichsbeispiel Carbendazim | > 1000 mg/kg |

### Beispiel 6

### Laborprüfung zum Einsatz in Textilhydrophobierungen

Zur Laborprüfung werden 1,00 g 2-n-Octyl-1,2-benzisothiazolin-3-on mit 49 g Paraffinöl bei 50^{o}C intensiv vermischt. Man erhält eine klare Lösung, aus der sich der Wirkstoff auch bei Lagerung bei 0^{o}C nicht wieder abscheidet. Vergleichsweise eingearbeitetes 2-n-Propyl-1,2-benzisothiazolin-3-on (bekannt aus GB 1 531 431) bildet keine homogene Lösung und scheidet sich als separate Phase wieder ab.

### Beispiel 7

### Konservierung von Wetblue

Frisch gegerbtes Leder (Wetblue) wurde in wäßrige Bäder getaucht, die jeweils 0,01 % der zu prüfenden Fungizide enthalten. Die fungizide Wirkung wird auf den Lederabschnitten auf festen Nährböden gemäß ASTM D 4576 geprüft und nach dem dort angegebenen Schema in eine Skala von 0 bis 4 ausgewertet. Als Testpilz wurde Aspergillus niger eingesetzt (siehe Tabelle 5)

**Tabelle 5**

| Bezeichnung der Proben | nach 3 Tagen | nach 7 Tagen | nach 14 Tagen |
|---|---|---|---|
| 1.) Wetblue mit 0,01 % OBIT | 0 | 1 | 2 |
| 2.) Wetblue mit 0,02 % OBIT | 0 | 1 | 1 |
| 3.) Wetblue mit 0,05 % OBIT | 0 | 0 | 1 |
| 4.) Vergleichsbeispiel Wetblue mit 0,05 % 2-Methyl-benzisothiazolin-3-on | 0 | 1 | 3 |
| 5.) Wuchskontrolle Wetblue ohne Zusatz | 0 | 2 | 4 |

## Patentansprüche

1. Verwendung von 2-n-Alkyl-1,2-benzisothiazolin-3-onen der allgemeinen Formel I 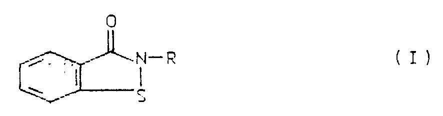 worin R geradkettiges (C₆-C₈)-Alkyl bedeutet, als technische Mikrobiozide.

2. Verwendung gemäß Anspruch 1 zum Schutz von Fassadenbeschichtungen, Dachsteinbeschichtungen, Kühlschmierstoffen, Silicatfarben und anderen alkalisch eingestellten - technischen Systemen, sowie von Holz, Leder, Lederhalbfabrikaten, Fassadenanstrichen, Putzsystemen, Holzanstrichen, Kunststoffen, wie z.B. PVC, Polyurethanen oder Polybutylen, Kunststoffputzen, Textilien, Industriewasserkreisläufen, Silikondichtungsmassen, Metallbearbeitungsflüssigkeiten, Leimen und Treibstoffen.

3. Verwendung gemäß Anspruch 1 und/oder 2, dadurch gekennzeichnet, daß PVC vor Befall mit Scopulariopsis brevicaulis geschützt wird.

4. Verwendung gemäß einem oder mehreren der Ansprüche 1 bis 3, dadurch gekennzeichnet, daß die Verbindung der Formel I in Konzentrationen von 0,005 bis 3 %, besonders bevorzugt 0,05 bis 1 %, bezogen auf das zu schützende Material eingesetzt wird.

5. Verwendung gemäß einem oder mehreren der Ansprüche 1 bis 4, dadurch gekennzeichnet, daß die Verbindung der allgemeinen Formel I in Form einer Lösung eingesetzt wird.

6. Verwendung gemäß einem oder mehreren der Ansprüche 1 bis 5, dadurch gekennzeichnet, daß die Verbindung en der allgemeinen Formel I in Kombination mit anderen antimikrobiell wirkenden Substanzen eingesetzt werden.

## Claims

1. Use of 2-n-alkyl-1,2-benzisothiazolin-3-ones of the general formula I 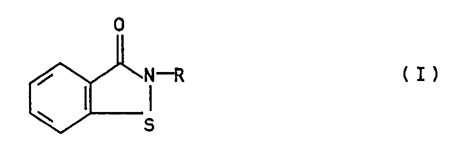 in which R denotes straight-chain (C₆-C₈)-alkyl, as industrial microbiocides.

2. Use according to Claim 1 for the protection of coatings for façades and for roof tiles, cooling lubricants, silicate paints and other alkaline industrial systems, as well as wood, leather, semi-finished leather products, house paints, plaster systems, wood paints, plastics such as, for example, PVC, polyurethanes or polybutylene, synthetic plasters, textiles, industrial water circuits, silicone sealants, metal-working fluids, glues and fuels.

3. Use according to Claim 1 and/or 2, characterized in that PVC is protected from attack by Scopulariopsis brevicaulis.

4. Use according to one or more of Claims 1 to 3, characterized in that the compound of the formula I is employed in concentrations of 0.005 to 3%, particularly preferably 0.05 to 1%, relative to the material to be protected.

5. Use according to one or more of Claims 1 to 4, characterized in that the compound of the general formula I is employed in the form of a solution.

6. Use according to one or more of Claims 1 to 5, characterized in that the compounds of the general formula I are employed in combination with other antimicrobially active substances.

## Revendications

1. Utilisation de 2-n-alkyl-1,2-benzisothiazoline-3-ones de formule générale I 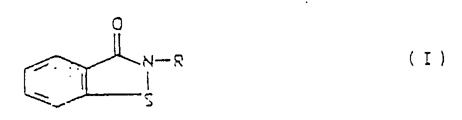 dans laquelle R est un radical alkyle en C₆-C₈ à chaîne droite, en tant que microbicides techniques.

2. Utilisation selon la revendication 1, pour protéger des revêtements de façades, des revêtements de tuiles, des lubrifiants-réfrigérants, des peintures aux silicates et d'autres systèmes techniques alcalins, ainsi que pour la protection du bois, du cuir, des semi-produits à base de cuir, des peintures pour façades, des systèmes d'enduits, des peintures sur bois, des plastiques tels que le PVC, des polyuréthannes ou du polybutylène, des enduits plastiques, des textiles, des circuits fermés d'eaux industrielles, des masses d'étanchéité siliconées, des fluides d'usinage des métaux, des colles et des carburants.

3. Utilisation selon les revendications 1 et/ou 2, caractérisée en ce que le PVC est protégé contre une infestation par Scopulariopsis brevicaulis.

4. Utilisation selon l'une ou plusieurs des revendications 1 à 3, caractérisée en ce que le composé de formule I est utilisé à des concentrations de 0,005 à 3 % et tout particulièrement de 0,05 à 1 % par rapport au matériau à protéger.

5. Utilisation selon l'une ou plusieurs des revendications 1 à 4, caractérisée en ce que le composé de formule générale I est utilisé sous forme d'une solution.

6. Utilisation selon l'une ou plusieurs des revendications 1 à 5, caractérisée en ce que le composé de formule générale I est utilisé en combinaison avec d'autres matières actives antimicrobiennes.
